Europäisches Patentamt

(19) European Patent Office

Office européen des brevets

(11) Publication number: **0 086 024**
**B1**

(12) **EUROPEAN PATENT SPECIFICATION**

(45) Date of publication of patent specification: **07.01.87**

(51) Int. Cl.⁴: **G 01 N 19/10,** G 02 B 6/44

(21) Application number: **83200187.9**

(22) Date of filing: **04.02.83**

(54) **Light guide for liquid detection and cable comprising such a guide.**

(30) Priority: **09.02.82 NL 8200495**

(43) Date of publication of application:
**17.08.83 Bulletin 83/33**

(45) Publication of the grant of the patent:
**07.01.87 Bulletin 87/02**

(84) Designated Contracting States:
**AT BE CH DE FR GB IT LI LU SE**

(56) References cited:
**EP-A-0 026 952**
**WO-A-79/00377**
**DE-A-2 508 315**
**DE-A-2 842 077**
**US-A-4 270 049**

**APPLIED PHYSICS LETTERS, vol. 36, no. 10,**
**15th May 1980, pages 799-801,**
**J. N. FIELDS: "Attenuation of a parabolic-index**
**fiber with periodic bends"**

(73) Proprietor: **Staat der Nederlanden**
**(Staatsbedrijf der Posterijen, Telegrafie en**
**Telefonie)**
**P.O. Box 430**
**NL-2260 AK Leidschendam (NL)**

(72) Inventor: **Diemeer, Martinus Bernardus**
**Johannes**
**4 Hildebrandhove**
**NL-2726 AW Zoetermeer (NL)**
Inventor: **De Jongh, Alphonsus Gerardus W.M.**
**16 Steursloot**
**NL-2724 EN Zoetermeer (NL)**

Courier Press, Leamington Spa, England.

## Description

The invention relates to a signalling conductor for signalling the presence of a liquid comprising a light guide, which light guide is enwrapped in a perforated tubular element comprising material swelling under the influence of said liquid and by swelling mechanically deforming said light guide.

The invention also relates to a cable comprising such signalling conductor. Proposals for a signalling conductor of that kind, and a cable comprising such a signalling conductor are known from the German application DE—A—2842077. They were intended so as to avoid the inclusion of an electrically conducting wire in a cable, which mainly comprises light guides, which wire is at the same time used for signalling purposes, including the signalling of liquid, such as ground water, which may have penetrated into the cable. Such an inclusion should be avoided because electrical conducting wires can be manipulated easier, e.g. for tapping. Also from a production technical point of view the inclusion of electrical conductors with a plurality of optical conductors arranged in a cable encounters difficulties, and therefore should be avoided.

Said application suggests a signalling conductor using a special fibre with a quartz core and a plastic cladding, which cladding can contain a material swelling under the contact with liquid. Such contact can cause a mechanical deformation of the cladding, and thus introduce a signal attenuation within the signalling conductor, which can be detected.

The drawbacks of said proposal are that a light guide has to be produced, which contains a special cladding, that the deformation of the cladding will have a damaging effect on the light guide, and that the attenuation in general will be relatively small, such that the entrance of small amounts of liquid will not be detected.

The object of the present invention is to provide a signalling conductor which does not have said drawbacks. This object is accomplished by means of a signalling conductor of the above kind characterized in that the tubular element comprises a pressure area provided with a wave-shaped pattern formed in such a manner that microbending of the light guide will occur when the light guide is pressed against said pattern by the swelling material after the entrance of a liquid into the tubular element.

The effects of microbending of light guides are described in an article by J.N. Fields in the Journal "Applied Physics Letters" 36(10), May 15, 1980, pp. 799—801.

In the signalling conductor according to the present invention a microbending caused by penetrating liquid results in a very strong attenuation, which can be detected and localized very easily.

It is true that the application WO 79/00377 discloses the use of an optical fibre as a sensor element by mechanically deforming the fibre over some short section by a deformer consisting of two steel pieces having corrugated surfaces. However, it does not in the least indicate a signalling conductor of the above kind, and which moreover can run long distances.

The invention can be advantageously applied in an optical fibre cable with a core with a star-shaped cross-section. One or more of the notches, defined by the space between the links of the star can be used to insert an optical light guide and a material which swells under the influence of liquid, according to claim 6. Optical fibre cables with a core with a star-shaped cross-section as such are known, e.g. from the applications DE—A—2508315 and EP—A—0026952.

The invention will be further elucidated hereinafter with reference to the drawing, in which

Fig. 1 is a sectional view of a preferred embodiment of a signalling conductor according to the invention;

Fig. 2 is a sectional view of a possible embodiment of a signalling conductor with separated compartments for light guide and swelling material;

Fig. 3 is a sectional view of a signalling conductor with swelling material applied to a round substrate;

Fig. 4 is a sectional view of a cable with a star-shaped core containing a signalling conductor according to the invention.

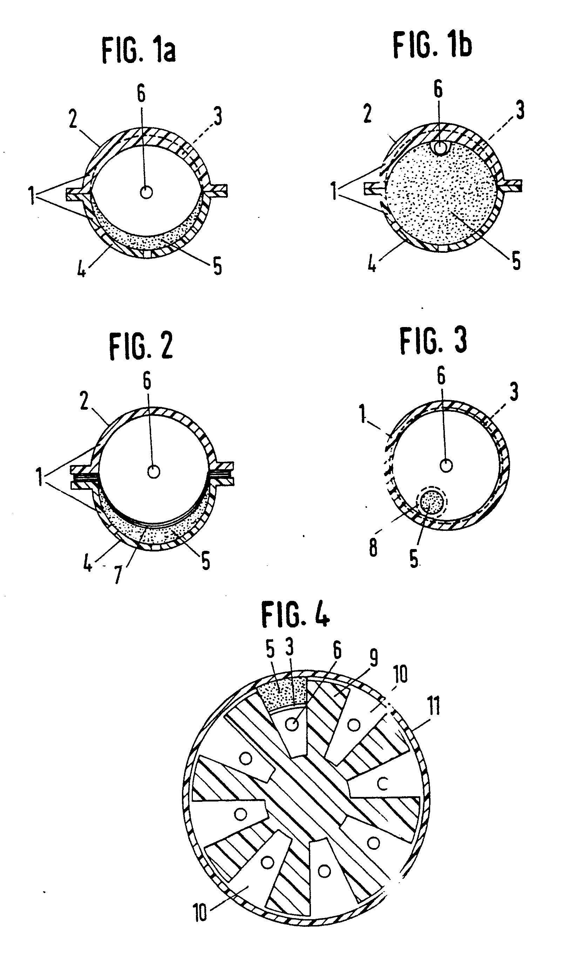

Fig. 1a shows a sectional view of a preferred embodiment, in which 1 designates a tubular element, here designed with an upper part 2 comprising a wave-shaped pattern 3, and a lower part 4 containing a swelling powder 5. A light guide 6 is mainly inserted loose in the tubular element 1. The parts 2 and 4 can be made of a suitable synthetic material, such as polyvinyldifluoride (PVDF). The wave-shaped pattern 3, the rib structure of which is in a position transversely to the longitudinal direction, can be rolled in in the course of the moulding process. The swelling powder 5 in the lower part 4 can have the form of an emulsion or it can be applied to a suitable substrate, such as a non-woven glass-fibre strip. After the light guide 6 has been inserted, the parts 2 and 4 are rolled together on the edges.

For each unit of length of the tubular element 1 the quantity of swelling powder supplied should be such that when liquid is absorbed, the light guide in the relevant portion will be deformed, due to the expansion of the swelling powder, to such an extent that signalling can take place, whereas the tubular element itself remains intact. The volume of a suitable swelling powder becomes about 20 times as large. The absorption of liquid takes place e.g. through perforations in the lower part 4 and/or in the upper part 2.

Fig. 1b shows a sectional view of the same optical guide, but now after the absorption of liquid. The swelling powder 5 has filled the tubular element 1 almost entirely and presses the light guide 6 against the wave-shaped pattern 3. It is remarked that even when the tubular element is not provided with a wave-shaped pattern, the structure of the light guide 6 ensures the observation of already an attenuation of the light signal in the light guide 6 of at least 0.5 dB/m. If the light guide is pressed on such a wave-shaped pattern that microbending is caused, an attenuation to 10 dB will be measured when liquid is absorbed over a distance of about 10 cm.

The attenuation and the place where the liquid enters can be measured according to known methods, such as the back-scatter method.

When it is undesirable that the light guide 6 should come into touch with entering liquid, the embodiment according to Fig. 2 will offer a solution. A flexible membrane 7, which is provided with a wave-shaped pattern, is mounted between the swelling powder 5 and the room containing the light guide 6.

Fig. 3 shows a third embodiment in which the whole inner periphery of the tubular element 1 is provided with the wave-shaped pattern 3, which can have the shape of separate ribs as well as the shape of a helical line with a suitable pitch. The swelling powder 5 is here applied to a rolled-up substrate 8, which can be easily included in the tubular element 1 in the course of the manufacturing process. When liquid enters, the substrate 8 can unroll.

Fig. 4 shows an embodiment of a cable which has a star-shaped core 9, in consequence of which axially running notches 10 are formed. A glass fibre can be inserted in each of these notches, whereas one of the notches comprises the signalling conductor. After the light guides have been inserted and the swelling powder has been supplied the star-shaped core 9 will be closed off by a sheath 11. The swelling powder 5 can be applied to a substrate or not. The wave-shaped pattern 3 can be mounted either on a separate membrane between the light guide 6 and the swelling powder 5 or on the bottom of the notch.

It is self-evident that the idea of the invention can be realized in a large number of other embodiments.

## Claims

1. Signalling conductor for signalling the presence of a liquid comprising a light guide, which light guide is enwrapped in a perforated tubular element (1) comprising a material (5) swelling under the influence of said liquid and by swelling mechanically deforming said light guide (6), characterized in that the tubular element (1) comprises a pressure area provided with a wave-shaped pattern (3) formed in such a manner that microbending of the light guide (6) will occur when the light guide is pressed against said pattern (3) by the swelling material (5) after the entrance of a liquid into the tubular element (1).

2. Signalling conductor in accordance with claim 1, characterized in that the swelling material (5) is inserted in or applied to a substrate.

3. Signalling conductor in accordance with claim 2, characterized in that the substrate has a cross-section which is mainly a circular ring area.

4. Signalling conductor in accordance with claim 1 or 2, characterized in that the wave-shaped pattern is applied to the inner periphery of the tubular element.

5. Signalling conductor in accordance with claim 1 or 2, characterized in that the tubular element comprises a membrane (7), which is mounted as a separating wall (7) between the swelling material (5) and the light guide (6), and which is provided with the wave-shaped pattern.

6. Cable, comprising one or more optical guides and a star-shaped core (9), the links of the star defining notches in between, characterized in that an optical light guide (6) and a material (5), which swells under the influence of liquid, have been inserted in one or more of the notches (10) of the core (9), and in that a wave-shaped pattern (3) is formed and mounted in such a manner that microbending of the light guide (6) will occur when the light guide (6) is pressed against said pattern (3) by the swelling material (5) after the entrance of liquid into the cable.

## Patentansprüche

1. Signalleiter zum Anzeigen der Anwesenheit einer Flüssigkeit, umfassend einen Lichtleiter, der durch ein perforiertes rohrförmiges Element (1) ummantelt ist, das ein unter dem Einfluss der Flüssigkeit schwellendes Material (5) enthält und mit diesem Schwellen den Lichtleiter (6) mechanisch deformiert, dadurch gekennzeichnet, dass das rohrförmige Element (1) eine Druckzone mit einer wellenförmigen Struktur (3) enthält, die derart ausgebildet ist, dass eine Mikrobiegung des Lichtleiters (6) erfolgt, wenn der Lichtleiter nach Eintritt der Flüssigkeit ins rohrförmige Element (1) durch das schwellende Material (5) gegen die Struktur (3) gedrückt wird.

2. Signalleiter nach Anspruch 1, dadurch gekennzeichnet, dass das schwellende Material (5) in einem Substrat eingelagert oder an das Substrat angelagert ist.

3. Signalleiter nach Anspruch 2, dadurch gekennzeichnet, dass das Substrat einen Querschnitt aufweist, der im wesentlichen ringförmig ist.

4. Signalleiter nach Anspruch 1 oder 2, dadurch gekennzeichnet, dass die wellenförmige Struktur an der inneren Peripherie des rohrförmigen Elementes angeordnet ist.

5. Signalleiter nach Anspruch 1 oder 2, dadurch gekennzeichnet, dass das rohrförmige Element eine Membran (7) enthält, die als Trennwand (7) zwischen dem schwellenden Material (5) und dem Lichtleiter (6) montiert ist, und die die wellenförmige Struktur enthält.

6. Kabel, enthaltend einen oder mehrere optische Leiter und einen sternförmigen Kern (9), wobei die Arme des Sterns zwischen sich Längsnuten einschliessen, dadurch gekennzeichnet, dass ein optischer Lichtleiter (6) und ein unter dem Einfluss von Flüssigkeit schwellendes Material (5) in eine oder mehrere der Nuten (10) des Kerns (9) eingeführt sind, und dass eine wellenförmige Struktur (3) derart geformt und montiert ist, dass eine Mikrobiegung des Lichtleiters (6) erfolgt, wenn nach Eintritt von Flüssigkeit ins Kabel der Lichtleiter (6) durch das schwellende Material (5) gegen die wellenförmige Struktur (3) gedrückt wird.

**Revendications**

1. Conducteur de signalisation pour signaler la présence d'un liquide, comprenant un guide de lumière enveloppé dans un élément tubulaire perforé (1) qui comprend une matière (5) gonflant sous l'effet de ce liquide et qui, en gonflant, déforme mécaniquement le guide de lumière (6), caractérisé en ce que l'élément tubulaire (1) comporte une aire de pression pourvue d'un tracé ondulé (3) formé de manière à produire la micro-courbure du guide de lumière (6) lorsque celui-ci est pressé contre le tracé ondulé (3) par la matière gonflante (5) après l'entrée d'un liquide dans l'élément tubulaire (1).

2. Conducteur selon la revendication 1, caractérisé en ce que la matière gonflante (5) est insérée dans ou appliquée sur un support.

3. Conducteur selon la revendication 2, caractérisé en ce que le support possède une section droite qui est essentiellement annulaire.

4. Conducteur selon la revendication 1 ou 2, caractérisé en ce que le tracé ondulé est appliqué sur la périphérie interne de l'élément tubulaire.

5. Conducteur selon la revendication 1 ou 2, caractérisé en ce que l'élément tubulaire comporte une membrane (7) qui est montée comme paroi de séparation entre la matière gonflante (5) et le guide de lumière (6) et est pourvue du tracé ondulé.

6. Câble, comprenant un ou plusieurs guides optiques et un noyau étoilé (9) dont les branches définissent des encoches entre elles, caractérisé en ce qu'un guide de lumière optique (6) et une matière (5) qui gonfle sous l'effet d'un liquide sont disposés dans une ou plusieurs encoches (10) du noyau (9) et qu'un tracé ondulé (3) est conformé et disposé de manière à produire la micro-courbure du guide de lumière (6) lorsque celui-ci est pressé contre le tracé ondulé (3) par la matière gonflante (5) après l'entrée d'un liquide dans le câble.

## FIG. 1a

## FIG. 1b

## FIG. 2

## FIG. 3

## FIG. 4